# EUROPÄISCHE PATENTSCHRIFT

(11) **EP 0 833 133 B1**
(45) Veröffentlichungstag und Bekanntmachung des Hinweises auf die Patenterteilung: **09.04.2003**
(21) Anmeldenummer: 97120677.6
(22) Anmeldetag: 28.05.1991
(51) Int. Cl.: G01F 15/18, G01F 17/00, B67B 3/00, B67B 3/24, B67C 3/00, B67C 3/10, B65C 3/06

(54) **Anschlussmittel für Geräte zum Messen des Volumens von Behältnissen**
Connecting means for apparatus for determining the capacity of containers
Moyens de raccordement pour les appareils pour la détermination de la capacité des récipients

(30) Priorität: 02.06.1990 DE 4017853
(43) Veröffentlichungstag der Anmeldung: 01.04.1998
(62) Teilanmeldung aus: 91108726.0
(73) Patentinhaber: Lehmann, Martin, CH-5610 Wohlen 1 (CH)
(72) Erfinder: Lehmann, Martin, CH-5610 Wohlen 1 (CH)
(74) Vertreter: Troesch Scheidegger Werner AG

(56) Entgegenhaltungen:
- WO-A-80/02196
- DE-A- 2 134 674
- FR-A- 2 532 928

## Beschreibung

Die vorliegende Erfindung betrifft einen Prüfanschluss nach dem Oberbegriff von Anspruch 1.

Zum Prüfen von Behältnissen ist oft ein Anschluss vorzusehen zum dichten Verbinden des Behältnisses mit einer Prüfleitung (siehe etwa WO02196). Auf diese Art und Weise ist es möglich, ein oder mehrere Behältnisse, wie insbesondere Kunststoff-Flaschen, während ihrer Durchlaufproduktion zu prüfen, und zwar nicht nur stichprobenartig, sondern, wie erwähnt, alle aus der Produktion kommenden und weitergeführten Behältnisse.

Dabei ist zu bedenken, dass für das Testen des Volumens von Behältnissen, wie beispielsweise von Flaschen, wobei als Gefäss direkt das Behältnis eingesetzt wird, die Anschlüsse für die Gaszuführung den jeweiligen Ausformungen der Behältnisse im Öffnungsbereich angepasst werden müssen.

Um ohne Umstellung und Montage jeweils passender Anschlüsse diesbezüglich eine hohe Flexibilität zu erreichen, wird nun ein Prüfanschluss für Behältnisse vorgeschlagen, der sich nach dem Kennzeichen von Anspruch 1 auszeichnet. Wiewohl ein solcher Anschluss auch für andere Vorgehensweisen, wie beispielsweise für das Füllen von Behältnissen, eingesetzt werden kann, wird er insbesondere im Zusammenhang mit der obgenannten Vorrichtung zur Volumenprüfung eingesetzt.

Die Erfindung wird anschliessen beispielsweise anhand von Figuren erläutert.

Es zeigen:
- Fig. 1: schematisch, eine Prüfvorrichtung, bei der als vom zu prüfenden Volumen abhängiges Volumen direkt dasjenige eines zu prüfenden Behältnisses eingesetzt wird,
- Fig. 2: in Darstellung analog zu derjenigen von Fig. 1, schematisch, die Prüfung von Behältnisgruppen in Linie während der Fertigung der Behältnisse,
- Fig. 3: eine Längsschnittdarstellung eines erfindungsgemässen Anschlusses für Behältnisse, insbesondere auch verwendet bei der Prüfung gemäss den Fig. 1 und 2 für ein Volumenprüfverfahren.

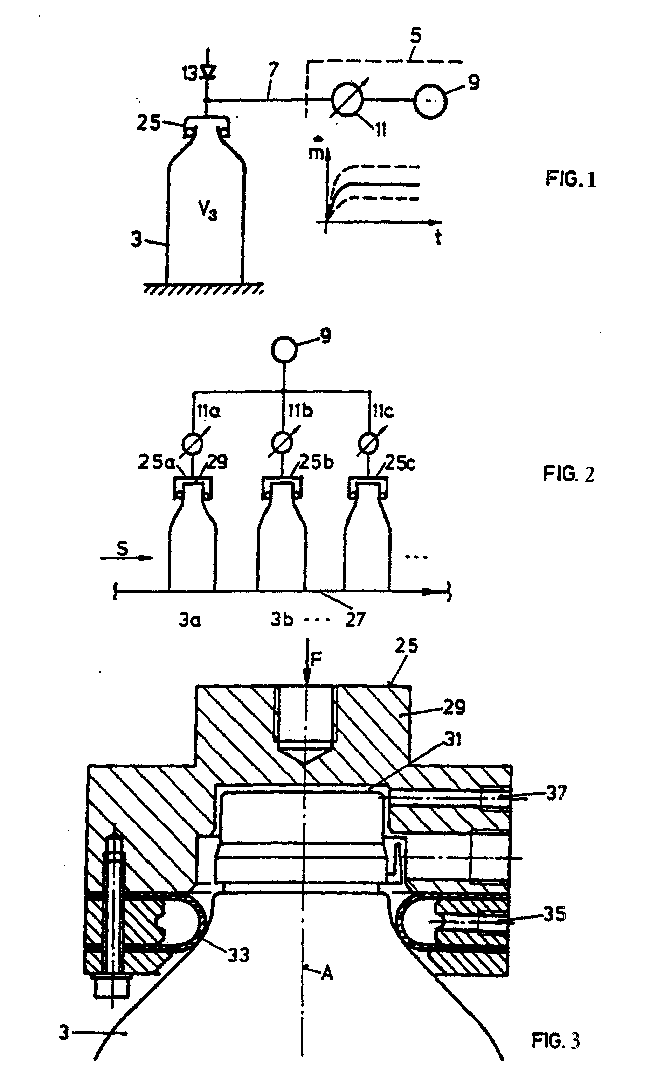

In Fig. 1 ist eine Prüfvorrichtung dargestellt, wenn ein vom zu prüfenden Volumen abhängiges Volumen direkt durch das Innenvolumen V₃ des zu prüfenden Behältnisses 3, wie beispielsweise einer Kunststoff-Flasche, gebildet wird. Hier wird ein gegebenenfalls vorgesehener Drucksensor 13 direkt an der Förderleitung 7 zwischen einem Anschluss 25 zum dichten Anschliessen der Leitung 7 an die Öffnung des Behältnisses 3 vorgesehen. Das Behältnis ist ein geöffnetes Behältnis, wie eine eben hergestellte Kunststoff-Flasche.

Diese Technik eignet sich, wie in Fig. 2 schematisch dargestellt, ausserordentlich gut zum Testen von in einem ununterbrochenen Strom S anfallenden, eben produzierten Behältnissen 3a, 3b etc., wobei entweder über flexible Anschlüsse die Volumenprüfung während der Behältnisbewegung, beispielsweise auf einem Förderband 27, erfolgt, oder aber ein intermittierend getriebenes Förderband bzw. eine entsprechend betriebene Fördereinrichtung vorgesehen ist, wo ein Behältnis oder, wie in Fig. 2 dargestellt, vorzugsweise mehrere Behältnisse gleichzeitig der Volumenprüfung unterzogen werden.

Um bei den Vorgehensweisen gemäss den Fig. 1 bzw.2 Dichtungsprobleme bei z.B. herstellungstoleranzbedingten Abweichungen der Dimensionen und Formen der Oeffnungsbereiche 29 der zu testenden Behältnisse zu beheben bzw. um verschiedene Behältnisse an einer Produktionslinie ohne Umstellarbeiten testen zu können, wird vorgeschlagen, die Anschlussteile 25 gemäss den Fig. 1 und 2, wie in Fig. 3 dargestellt, auszubilden. Demnach umfasst ein erfindungsgemässes Anschlussteil ein Gehäuse 29, beispielsweise aus Metall oder Kunststoff, mit einer Aufnahme 31 zur Aufnahme der Oeffnungspartie des zu prüfenden Behältnisses 3, beispielsweise eines Flaschenhalses einer Kunststoff-Flasche.

Im unteren Bereich der Aufnahme 31 ist, koaxial zu einer Achse A der Aufnahme 31, ein umlaufender Balg 33 montiert, aus gummielastischem Material, und es sind an einer oder mehreren Stellen Druckmediumsleitungen 35 vorgesehen, die in den Balg 33 einmünden, bevorzugterweise für ein Druckgas.

Im weiteren umfasst ein erfindungsgemässer Anschluss eine Zuführleitung 37, welche in die Aufnahme 31 einmündet und die, sofern der erfindungsgemässe Anschluss zu Volumentestzwecken gemäss den Fig. 1 oder 2 eingesetzt wird, an die Gaszuspeisungsleitung 7 angeschlossen wird.

Durch Aufblasen des Balges 33 wird der Anschluss 25 in seinem unteren Bereich dichtend an die Oeffnungspartie bzw. den Flaschenhals des jeweils zu testenden Behältnisses 3 angelegt. Es wird ein dichter Sitz erreicht, in weiten Grenzen unabhängig von der spezifischen Ausformung bzw. Dimensionierung dieser Oeffnungspartie. Bevorzugterweise wird beim Aufbringen des Anschlusses 25, wie mit F dargestellt, Druck auf den Anschluss 25 ausgeübt, der sich über das zu prüfende Behältnis 3 auf dessen jeweilige Standfläche überträgt, so dass bei Aufblasen und dichtem Anlegen des Balges 33 an die Aussenwandung des zu prüfenden Behältnisses 3, in axialer Richtung gemäss A, kein Weichen von Anschluss 25 bzw. Behältnis 3 erfolgen kann.

In der beschriebenen Art und Weise können geschlossene oder geöffnete Behältnisse rasch einer Volumenprüfung unterzogen werden, indem die in den Figuren dargestellten und erläuterten Auswertesignale, wie nicht eigens erläutert, aber dem Fachmann ohne weiteres erkenntlich, einer weiteren Klassierung unterzogen werden: Je nachdem, ob die Auswertesignale, verglichen mit einem vorgegebenen Wert, zu gross oder zu klein sind, wird ein jeweils geprüftes Behältnis als unzulässig gross oder unzulässig klein verworfen.

Mit Hilfe des erfindungsgemäss vorgeschlagenen Anschlusses können im weiteren Behältnisse mit in weiten Grenzen unterschiedlich geformten bzw. dimensionierten Oeffnungspartien, wie Flaschenhälsen, dichtend kontaktiert werden, wie zu deren Füllen, oder, im Zusammenhang mit der Volumenprüfung, um die Behältnisse mit Prüfgas zu beaufschlagen.

## Patentansprüche

1. Dichtanschluss für Behältnisse mit einer stutzenartigen Öffnungspartie, **dadurch gekennzeichnet, dass** ein Anschlussgehäuse (29) mit mindestens einer Kupplung (37) für eine dichtend anzuschliessende einmündende Leitung (7) vorgesehen ist, sowie am Gehäuse mindestens ein pneumatisch betriebener, gummielastischer Dichtungsbalg (33) mit einer weiteren Kupplung (35) für eine daran anzuschliessende Druckmediumsleitung vorgesehen ist, derart, dass, in Grenzen unabhängig von der Gestalt der anzuschliessenden stutzenartigen Öffnungspartie, der Dichtanschluss (25) dicht an diese applizierbar ist.

2. Verwendung des Anschlusses nach Anspruch 1 für Flaschen.

3. Verwendung des Anschlusses nach Anspruch 1 für das Anschliessen von Behältnissen an einer Prüfmaschine, woran die Behältnisse in einem Strom anfallend geprüft werden.

## Claims

1. Tight connection for receptacles with a supporting opening part, **characterised in that** a connection housing (29) is equipped with at least one coupling (37) for a line (7) to be joined by means of a tight connection, and the housing is equipped with at least one pneumatically driven, elastic rubber sealing bellows (33) with an additional coupling (35) for a pressurised medium line to be connected, such that, within limits independent of the structure of the supporting opening part to be connected, the tight connection (25) can be applied in a tight manner onto said part.

2. Use of the connection according to claim 1 for bottles.

3. Use of the connection according to claim 1 for connecting receptacles to a testing machine, whereon the receptacles are tested accordingly in a flow.

## Revendications

1. Raccord d'étanchéité pour des récipients avec une partie d'ouverture en forme de manchon, **caractérisé en ce qu'**il est prévu un boîtier de raccordement (29) avec au moins un couplage (37) pour un conduit d'entrée (7) à raccorder d'une manière étanche, et qu'il est prévu au boîtier au moins un soufflet d'étanchéité (33) ayant une élasticité de caoutchouc, actionné d'une manière pneumatique, avec un autre couplage (35) pour un conduit de milieu sous pression à raccorder à celui-ci de telle sorte que, dans des limites indépendamment de la configuration de la partie d'ouverture en forme de manchon à raccorder, le raccord d'étanchéité (25) peut être appliqué d'une manière étanche à celle-ci.

2. Utilisation du raccord selon la revendication 1 pour des bouteilles.

3. Utilisation du raccord selon la figure 1 pour raccorder des récipients à une machine d'essai, où les récipients sont examinés, qui se présentent en un flux.
